(19) Europäisches Patentamt / European Patent Office / Office européen des brevets

(11) **EP 4 644 833 A1**

(12) **EUROPEAN PATENT APPLICATION**
published in accordance with Art. 153(4) EPC

(43) Date of publication:
**05.11.2025 Bulletin 2025/45**

(21) Application number: **23910413.6**

(22) Date of filing: **22.12.2023**

(51) International Patent Classification (IPC):
*G01C 15/00* $^{(2006.01)}$   *G01B 11/00* $^{(2006.01)}$

(52) Cooperative Patent Classification (CPC):
**G01B 11/00; G01C 15/00**

(86) International application number:
**PCT/CN2023/141119**

(87) International publication number:
**WO 2024/140487 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 CN 202211688351**

(71) Applicants:
• **NUCTECH COMPANY LIMITED**
  **Beijing 100084 (CN)**
• **Tsinghua University**
  **Haidian District,**
  **Beijing 100084 (CN)**

(72) Inventors:
• **CHEN, Zhiqiang**
  **Beijing 100084 (CN)**

• **ZHANG, Li**
  **Beijing 100084 (CN)**
• **TANG, Hu**
  **Beijing 100084 (CN)**
• **ZHANG, Jiaming**
  **Beijing 100084 (CN)**
• **DOU, Jianqing**
  **Beijing 100084 (CN)**
• **QIAN, Zhengwei**
  **Beijing 100084 (CN)**
• **ZHAO, Yan**
  **Beijing 100084 (CN)**
• **SONG, Yahui**
  **Beijing 100084 (CN)**
• **WANG, Gang**
  **Beijing 100084 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND APPARATUS FOR DETERMINING INSTALLATION POSITIONS OF LIGHTING APPARATUSES, AND LIGHT SUPPLEMENT DEVICE**

(57)    The present disclosure provides a method and a device for determining an installation position of a lighting device as well as a light supplement apparatus, which can be applied in an intelligent lighting field. The method includes: determining initial light field energy distribution information according to illumination attribute information of each lighting device in a plurality of lighting arrays and a positional relationship of the lighting device with respect to the reference surface; updating an initial installation position of each lighting device in a symmetrical lighting tuple based on a comparison result between abnormal light field energy distribution information in the initial light field energy distribution information and a light field energy threshold, so as to obtain a plurality of candidate lighting arrays; determining candidate light field energy distribution information according to illumination attribute information of each lighting device in the candidate lighting arrays and a positional relationship of the lighting device in the candidate lighting arrays with respect to the reference surface; determining a candidate installation position as a target installation position in the case where abnormal light field energy distribution information in the candidate light field energy distribution information satisfies a light field energy range.

**(Cont. next page)**

EP 4 644 833 A1

determining initial light field energy distribution information of a plurality of lighting arrays on a reference surface according to illumination attribute information of each lighting device in the plurality of lighting arrays and a positional relationship of the lighting device with respect to the reference surface

S210

updating an initial installation position of each lighting device in the symmetrical lighting tuple according to an adjustment distance based on a comparison result between abnormal light field energy distribution information in the initial light field energy distribution information and a light field energy threshold

S220

determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface

S230

determining a candidate installation position of each lighting device in the candidate lighting arrays as a target installation position in the case where abnormal light field energy distribution information in the candidate light field energy distribution information satisfies a light field energy range corresponding to the light field energy threshold

S240

FIG. 2

## Description

The present disclosure claims the benefit of Chinese Patent Application No. 202211688351.7 filed on December 27, 2022, the entire disclosure of which is incorporated herein by reference.

## FIELD

The present disclosure relates to the field of intelligent lighting, and particularly to a method and a device for determining an installation position of a lighting device, an electronic apparatus, a storage medium, a program product, and a lighting apparatus.

## BACKGROUND

Lighting apparatus such as a light supplement lamp can be used in multiple application scenarios such as intelligent security and traffic monitoring. By installing lighting devices such as LED lamp beads around an image acquisition device, additional lighting sources can be provided for the image acquisition device, which can improve the imaging quality of images acquired by the image acquisition device, so that the image acquisition device such as a camera can acquire clear image information. However, lighting devices such as a light supplement lamp in the related art provides light of poor quality, which affects the imaging effect of image acquisition devices.

## SUMMARY

In view of the above problems, the present disclosure provides a method and a device for determining an installation position of a lighting device, an electronic apparatus, a storage medium, a program product and a lighting device.

According to a first aspect of the present disclosure, there is provided a method for determining an installation position of a lighting device, comprising:

determining initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple;

updating an initial installation position of each lighting device in the symmetrical lighting tuple according to an adjustment distance based on a comparison result between abnormal light field energy distribution information in the initial light field energy distribution information and a light field energy threshold, so as to obtain a plurality of candidate lighting arrays;

determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface;

determining a candidate installation position of each lighting device in the candidate lighting arrays as a target installation position in the case where abnormal light field energy distribution information in the candidate light field energy distribution information satisfies a light field energy range corresponding to the light field energy threshold.

According to embodiments of the present disclosure, the illumination attribute information comprises a light irradiation angle and an initial illumination intensity, and the positional relationship comprises a distance from each lighting device to the reference surface;

wherein said determining initial light field energy distribution information of a plurality of lighting arrays on a reference surface according to illumination attribute information of each lighting device in the plurality of lighting arrays and a positional relationship of the lighting device with respect to the reference surface comprises:

determining an initial illumination region on the reference surface corresponding to each lighting device and a light illumination distance between the lighting device and an illuminated point in the initial illumination region according to a light irradiation angle of each lighting device and a distance from each lighting device to the reference surface;

determining an initial illumination energy of the lighting device at the illuminated point according to the initial illumination intensity of the lighting device and the light illumination distance;

calculating an initial accumulative illumination energy of the illuminated point according to the initial illumination energy of each lighting device in the plurality of lighting arrays which is associated with the illuminated point at the illuminated point; and

determining the initial light field energy distribution information according to the initial accumulative illumination energy of the illuminated point and a positional relationship between the illuminated point and the reference surface.

According to embodiments of the present disclosure, the reference surface is parallel to a lighting plane formed by the plurality of lighting arrays, the calibration point is located in the lighting plane, the abnormal light field energy distribution information comprises a mapping point illumination energy of a mapping point, and the mapping point is obtained by mapping the calibration point to the reference surface;

the method for determining an installation position of a lighting device further comprises:

determining the mapping point illumination energy of the mapping point according to the initial light field energy distribution information;

wherein said updating an initial installation position of each lighting device in the symmetrical lighting tuple according to an adjustment distance based on a comparison result between abnormal light field energy distribution information in the initial light field energy distribution information and a light field energy threshold comprises:

comparing the mapping point illumination energy with the light field energy threshold to obtain the comparison result;

moving lighting devices in the symmetrical lighting tuple respectively along a first direction close to the calibration point by the adjustment distance to obtain the candidate installation position of each lighting device in the symmetrical lighting tuple in the case where the comparison result represents that the mapping point illumination energy is greater than the light field energy threshold; and

constructing the plurality of candidate lighting arrays according to the candidate installation position of each lighting device in the symmetrical lighting tuple.

According to embodiments of the present disclosure, there are a plurality of symmetrical lighting tuples, and the plurality of symmetrical lighting tuples comprise a target symmetrical lighting tuple;

wherein said moving lighting devices in the symmetrical lighting tuple respectively along a first direction close to the calibration point by the adjustment distance comprises:

moving target lighting devices in the target symmetrical lighting tuple respectively along the first direction close to the calibration point by the adjustment distance to obtain the candidate installation position of each target lighting device in the target symmetrical lighting tuple.

According to embodiments of the present disclosure, said updating an initial installation position of each lighting device in the symmetrical lighting tuple according to an adjustment distance based on a comparison result between abnormal light field energy distribution information in the initial light field energy distribution information and a light field energy threshold further comprises:

comparing the mapping point illumination energy with the light field energy threshold to obtain the comparison result;

moving lighting devices in the symmetrical lighting tuple respectively along a second direction away from the calibration point by the adjustment distance to obtain the candidate installation position of each lighting device in the symmetrical lighting tuple in the case where the comparison result represents that the mapping point illumination energy is less than the light field energy threshold; and

constructing the plurality of candidate lighting arrays according to the candidate installation position of each lighting device in the symmetrical lighting tuple.

According to embodiments of the present disclosure, there are a plurality of symmetrical lighting tuples, and the plurality of symmetrical lighting tuples comprise a target symmetrical lighting tuple;

wherein said moving lighting devices in the symmetrical lighting tuple respectively along a second direction away from the calibration point by the adjustment distance comprises:

moving target lighting devices in the target symmetrical lighting tuple respectively along the second direction away from the calibration point by the adjustment distance to obtain the candidate installation position of each target lighting device in the target symmetrical lighting tuple.

According to embodiments of the present disclosure, there are a plurality of initial installation distances between adjacent lighting devices in the lighting arrays;

the plurality of initial installation distances in the lighting arrays gradually increase along an arrangement direction from away from the calibration point to close to the calibration point.

According to embodiments of the present disclosure, the plurality of lighting arrays being symmetrical with respect to a calibration point comprises:

the plurality of lighting arrays being in central symmetry with respect to the calibration point; or
the plurality of lighting arrays being in axial symmetry with respect to the calibration point.

A second aspect of the present disclosure further provides a device for determining an installation position of a lighting device, comprising:

a first determination module for determining initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple;

an update module for updating an initial installation position of each lighting device in the symmetrical lighting tuple according to an adjustment distance based on a comparison result between abnormal light field energy distribution information in the initial light field energy distribution information and a light field energy threshold, so as to obtain a plurality of candidate lighting arrays;

a second determination module for determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface;

a target installation position determination module for determining a candidate installation position of each lighting device in the candidate lighting arrays as a target installation position in the case where abnormal light field energy distribution information in the candidate light field energy distribution information satisfies a light field energy range corresponding to the light field energy threshold.

A third aspect of the present disclosure further provides a lighting apparatus for light supplement, comprising:

a plurality of lighting devices; and
a lighting device installation structure, comprising a plurality of target installation positions, wherein the target installation positions are configured to install the lighting devices;
wherein the target installation positions are obtained by the method for determining an installation position of a lighting device described above.

A fourth aspect of the present disclosure provides an electronic apparatus, comprising: one or more processors; a storage device for storing one or more programs, wherein, when the one or more programs are executed by the one or more processors, the method for determining an installation position of a lighting device is implemented by the one or more processors.

A fifth aspect of the present disclosure further provides a computer-readable storage medium having executable instructions stored thereon, which, when executed by a processor, cause the processor to implement the method for determining an installation position of a lighting device.

A sixth aspect of the present disclosure further provides a computer program product comprising a computer program, which, when executed by a processor, implements the method for determining an installation position of a lighting device.

## BRIEF DESCRIPTION OF THE DRAWINGS

The above contents as well as other purposes, features and advantages of the present disclosure will become clearer through the following description of embodiments of the present disclosure with reference to the accompanying drawings, in which:

FIG. 1 schematically illustrates an application scenario diagram of a method and a device for determining an installation position of a lighting device according to an embodiment of the present disclosure;
FIG. 2 schematically illustrates a flow chart of a method for determining an installation position of a lighting device according to an embodiment of the present disclosure;
FIG. 3 schematically illustrates a flow chart of determining initial light field energy distribution information of a plurality of lighting arrays on a reference surface according to illumination attribute information of each lighting device in the plurality of lighting arrays and a positional relationship of the lighting device with respect to the reference surface according to an embodiment of the present disclosure;
FIG. 4 schematically illustrates a schematic view of determining an initial illumination energy of an illuminated point according to an embodiment of the present disclosure;
FIG. 5 schematically illustrates a schematic view of disposing lighting devices at initial installation positions according to an embodiment of the present disclosure;
FIG. 6 schematically illustrates a schematic view of initial light field energy distribution information according to an embodiment of the present disclosure;
FIG. 7 schematically illustrates a structural schematic view of a lighting apparatus for light supplement according to an embodiment of the present disclosure;
FIG. 8 schematically illustrates a structural block diagram of a device for determining an installation position of a lighting device according to an embodiment of the present disclosure; and
FIG. 9 schematically illustrates a block diagram of an electronic apparatus adapted for implementing a method for determining an installation position of a lighting device according to an embodiment of the present disclosure.

## DETAILED DESCRIPTION

Hereinafter, embodiments of the present disclosure will be described with reference to the accompanying drawings. However, it should be understood that these descriptions are exemplary only and are not intended to limit the scope of the present disclosure. In the following detailed description, to facilitate explanation, many specific details are set forth to provide a comprehensive understanding of the embodiments of the present disclosure. However, it is obvious that one or more embodiments can also be implemented without these specific details. In addition, in the following description, descriptions of well-known structures and technologies are omitted to avoid unnecessary confusion of the concepts of the present disclosure.

The terms used herein are only for describing specific embodiments and are not intended to limit the present disclosure. The terms "including", "comprising", etc. used herein indicate the presence of the features, steps, operations and/or components, but do not exclude the presence or addition of one or more other features, steps, operations or components.

All terms (including technical and scientific terms) used herein have the meanings commonly understood by those skilled in the art unless otherwise defined. It is to be noted that the terms used herein should be interpreted as having meanings consistent with the context of this specification and should not be interpreted in an idealized or overly rigid manner.

When using an expression similar to "at least one of A, B and C", it should generally be interpreted according to the meaning of the expression commonly understood by those skilled in the art (for example, "a system having at least one of A, B and C" should include but is not limited to a system having A alone, having B alone, having C alone, having A and B, having A and C, having B and C, and/or having A, B, C).

In the technical solution of the present disclosure, collection, storage, use, processing, transmission, provision, disclosure, application and other processing of the data involved (for example, including but not limited to user personal information) all conform to the provisions of relevant laws and regulations, take necessary confidentiality measures, and do not violate public order and good morals.

Embodiments of the present disclosure provide a method and a device for determining an installation position of a lighting device as well as a light supplement apparatus. The method comprises: determining initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple; updating an initial installation position of each lighting device in the symmetrical lighting tuple according to an adjustment distance based on a comparison result between abnormal light field energy distribution information in the initial light field energy distribution information and a light field energy threshold, so as to obtain a plurality of candidate lighting arrays; determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface; determining a candidate installation position of each lighting device in the candidate lighting arrays as a target installation position in the case where abnormal light field energy distribution information in the candidate light field energy distribution information satisfies a light field energy range corresponding to the light field energy threshold.

According to embodiments of the present disclosure, by calculating initial light field energy distribution information of lighting devices in lighting arrays on the reference surface, and then updating an initial installation position of each lighting device based on a comparison result between abnormal light field energy distribution information in the initial light field energy distribution information and a light field energy threshold, in the case where abnormal light field energy distribution information in the candidate light field energy distribution information formed by the lighting arrays at the updated candidate installation positions on the reference surface satisfies the light field energy range corresponding to the light field energy threshold, the lighting devices at the target installation positions can form a more uniform light field distribution on the reference surface, which can improve the uniformity of illumination of the lighting devices, so that when the lighting devices are used to supplement light for an image acquisition device, the technical problem of overexposure can be avoided in acquired images, thereby achieving the technical effect of improving the quality of image acquisition.

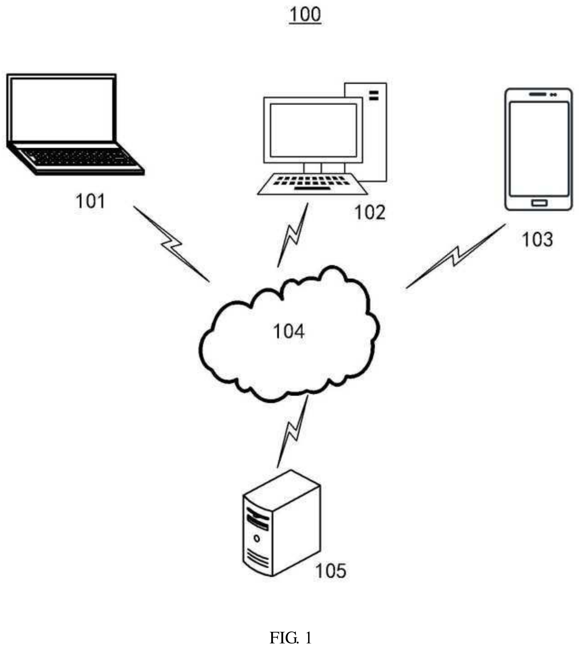

FIG. 1 schematically illustrates an application scenario diagram of a method and a device for determining an installation position of a lighting device according to an embodiment of the present disclosure.

As shown in FIG. 1, an application scenario 100 according to this embodiment may include a first terminal apparatus 101, a second terminal apparatus 102, a third terminal apparatus 103, a network 104, and a server 105. The network 104 is used to provide a medium for communication links between the first terminal apparatus 101, the second terminal apparatus 102, the third terminal apparatus 103 and the server 105. The network 104 may include various connection types, such as wired, wireless communication links or optical fiber cables, etc.

The user may use at least one of the first terminal apparatus 101, the second terminal apparatus 102 and the third terminal apparatus 103 to interact with the server 105 through the network 104 to receive or send messages, etc. Various communication client applications may be installed on the first terminal apparatus 101, the second terminal apparatus 102 and the third terminal apparatus 103, such as shopping applications, web browser applications, search applications, instant messaging tools, email clients, social platform software, etc.

(only as examples).

The first terminal apparatus 101, the second terminal apparatus 102 and the third terminal apparatus 103 may be various electronic apparatuses having display screens and supporting web browsing, including but not limited to smart phones, tablet computers, laptop portable computers, desktop computers, and the like.

The server 105 may be a server that provides various services, such as a background management server (only as an example) that provides support for websites browsed by users using the first terminal apparatus 101, the second terminal apparatus 102 and the third terminal apparatus 103. The background management server may analyze and process the received data such as user requests, and feed back the processed results (such as web pages, information, data or the like obtained or generated according to user requests) to a terminal apparatus.

It is to be noted that the method for determining an installation position of a lighting device provided in the embodiment of the present disclosure may be executed by the server 105. Accordingly, the device for determining an installation position of a lighting device provided in the embodiment of the present disclosure may generally be disposed in the server 105. The method for determining an installation position of a lighting device provided in the embodiment of the present disclosure may also be executed by a server or a server cluster that is different from the server 105 and can communicate with the first terminal apparatus 101, the second terminal apparatus 102, the third terminal apparatus 103 and/or the server 105. Accordingly, the device for determining an installation position of a lighting device provided in the embodiment of the present disclosure may also be disposed in a server or a server cluster that is different from the server 105 and can communicate with the first terminal apparatus 101, the second terminal apparatus 102, the third terminal apparatus 103 and/or the server 105. Accordingly, the method for determining an installation position of a lighting device provided in the embodiment of the present disclosure may be executed by any one or more of the first terminal apparatus 101, the second terminal apparatus 102 and the third terminal apparatus 103. The device for determining an installation position of a lighting device provided in the embodiment of the present disclosure may be disposed in any one or more of the first terminal apparatus 101, the second terminal apparatus 102 and the third terminal apparatus 103.

It should be understood that the numbers of terminal apparatuses, networks and servers in FIG. 1 are only schematic. According to implementation requirements, there may be any number of terminal apparatuses, networks and servers.

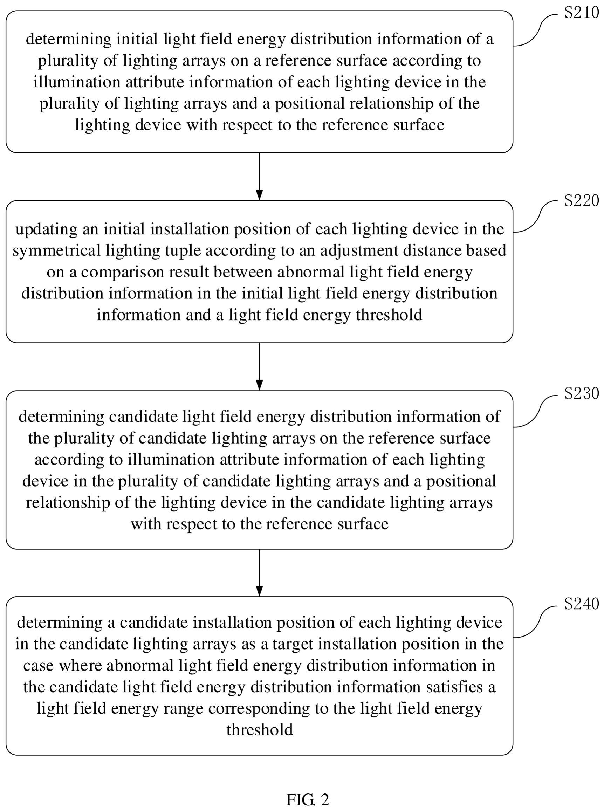

Based on the scenario described in FIG. 1, the method for determining an installation position of a lighting device according to an embodiment of the present disclosure will be described in detail by means of FIG. 2 to FIG. 6.

FIG. 2 schematically illustrates a flow chart of a method for determining an installation position of a lighting device according to an embodiment of the present disclosure.

As shown in FIG. 2, the method for determining an installation position of a lighting device according to this embodiment includes operations S210 to S230.

In operation S210, initial light field energy distribution information of a plurality of lighting arrays on a reference surface is determined according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple.

According to the embodiment of the present disclosure, the lighting device may include an element, a device, etc. capable of emitting light, such as an LED lamp. The specific type of the lighting device is not limited in the embodiment of the present disclosure, and those skilled in the art may can selection according to actual needs, as long as the reference surface can be illuminated.

According to the embodiment of the present disclosure, the illumination attribute information may include attribute information of light emitted by a lighting device or lighting array, such as a light irradiation angle, a light intensity, etc., and the specific type of the illumination attribute information is not limited in the embodiment of the present disclosure.

According to the embodiment of the present disclosure, the lighting array may be obtained by arranging lighting devices in an array form, and the dimension of the lighting array may be one-dimensional or multi-dimensional. The dimension of the lighting array is not limited in the embodiment of the present disclosure, and may be chosen according to actual needs by those skilled in the art.

According to the embodiment of the present disclosure, the calibration point may be set at any position in the space, for example, it may be set in a plane formed by the lighting array, or it may also be set in a plane where the reference surface is located, or in the space of the light-emitting direction of the lighting device, or on a back side opposite to the light-emitting direction of the lighting device. Those skilled in the art may set the specific position of the calibration point according to actual needs, and it is not limited in the embodiment of the present disclosure.

According to the embodiment of the present disclosure, the lighting tuple may be a group of lighting devices symmetrical with respect to the calibration point, and the number of lighting devices in the lighting tuple is not limited in the embodiment of the present disclosure.

In operation S220, an initial installation position of each lighting device in the symmetrical lighting tuple is updated according to an adjustment distance based on a comparison result between abnormal light field energy distribution information in the initial light field energy distribution information and a light field energy threshold, so as to obtain a plurality of candidate lighting arrays.

According to the embodiment of the present disclosure, the initial light field energy distribution information may be a distribution of light intensity of the reference surface that is received by an illuminated region when the lighting array illuminates the reference surface or light emitted by the lighting array is simulated to illuminate the reference surface. In the initial light field energy distribution information, the distribution information that is significantly deviated from a reference light field energy value may be abnormal light field energy distribution information. For example, in the case where the light field energy distribution of a middle region in the initial light field energy distribution information is much greater than the reference light field energy value, the middle region may be abnormal light field energy distribution information in the initial light field energy distribution information.

It is to be noted that the light field energy threshold may be a specific value or a value range, and the specific type of the light field energy threshold is not limited in the embodiment of the present disclosure.

In operation S230, candidate light field energy distribution information of the plurality of candidate lighting arrays on the reference surface is determined according to illumination attribute information of each lighting device in the plurality of candidate lighting arrays and a positional relationship of the lighting device in the candidate lighting arrays with respect to the reference surface.

In operation S240, a candidate installation position of each lighting device in the candidate lighting arrays is determined as a target installation position in the case where abnormal light field energy distribution information in the candidate light field energy distribution information satisfies a light field energy range corresponding to the light field energy threshold.

According to the embodiment of the present disclosure, the frequency of updating the initial installation position of each lighting device may be one or more times, and the frequency of updating to obtain the target installation position is not limited in the embodiment of the present disclosure.

It is to be noted that the target installation position may be determined based on any method in the related art, for example, the target installation position may be obtained by fitting based on a fitting algorithm in the relevant art, such as the least squares method. Alternatively, the abnormal light field distribution information in the candidate light field distribution information and the light field energy threshold may be processed based on a loss function until the loss function converges, that is, when the abnormal light field energy distribution information satisfies the light field energy range corresponding to the light field energy threshold, a corresponding candidate installation position is determined as the target installation position.

According to the embodiment of the present disclosure, the light field energy threshold may be determined by the upper limit light field energy value or the lower limit light field energy value of the light field energy range, or may also be determined according to actual needs of those skilled in the art. The specific method for determining the light field energy threshold is not limited in the embodiment of the present disclosure, and may be chosen according to actual needs by those skilled in the art.

According to the embodiment of the present disclosure, by calculating initial light field energy distribution information of lighting devices in lighting arrays on the reference surface, and then updating an initial installation position of each lighting device based on a comparison result between abnormal light field energy distribution information in the initial light field energy distribution information and a light field energy threshold, in the case where abnormal light field energy distribution information in the candidate light field energy distribution information formed by the lighting arrays at the updated candidate installation positions on the reference surface satisfies the light field energy range corresponding to the light field energy threshold, the lighting devices at the target installation positions can form a more uniform light field distribution on the reference surface, which can improve the uniformity of illumination of the lighting devices, so that when the lighting devices are used to supplement light for an image acquisition device, the technical problem of overexposure can be avoided in acquired images, thereby achieving the technical effect of improving the quality of image acquisition.

According to the embodiment of the present disclosure, the plurality of lighting arrays being symmetrical with respect to a calibration point may include:
the plurality of lighting arrays being in central symmetry with respect to the calibration point; or the plurality of lighting arrays being in axial symmetry with respect to the calibration point.

It should be understood that, in the case where the plurality of lighting arrays are in central symmetry with respect to the calibration point, the plurality of lighting devices in the symmetrical lighting tuple are in central symmetry with respect to the calibration point. In the case where the plurality of lighting arrays are in axial symmetry with respect to the calibration point, the plurality of lighting devices in the symmetrical lighting tuple are in axial symmetry with respect to the calibration point.

According to the embodiment of the present disclosure, there are multiple initial installation distances between adjacent lighting devices in the lighting arrays.

The multiple initial installation distances in the lighting arrays gradually increase along an arrangement direction from away from the calibration point to close to the calibration point.

According to the embodiment of the present disclosure, in the case that each lighting device in a lighting array has the same illumination attribute information, the deviation degree of abnormal light field energy distribution information in the initial light field energy distribution information with respect to the light field energy threshold can be reduced by setting the initial installation positions in a manner that the lighting devices in the same lighting array are gradually sparsely arranged in a direction towards the calibration point, which can further decrease the frequency of subsequent adjustments to obtain the target installation positions, thereby improving the overall efficiency of determining the target installation positions.

According to the embodiment of the present disclosure, the illumination attribute information includes a light irradiation angle and an initial illumination intensity, and the positional relationship includes the distance from each lighting device to the reference surface.

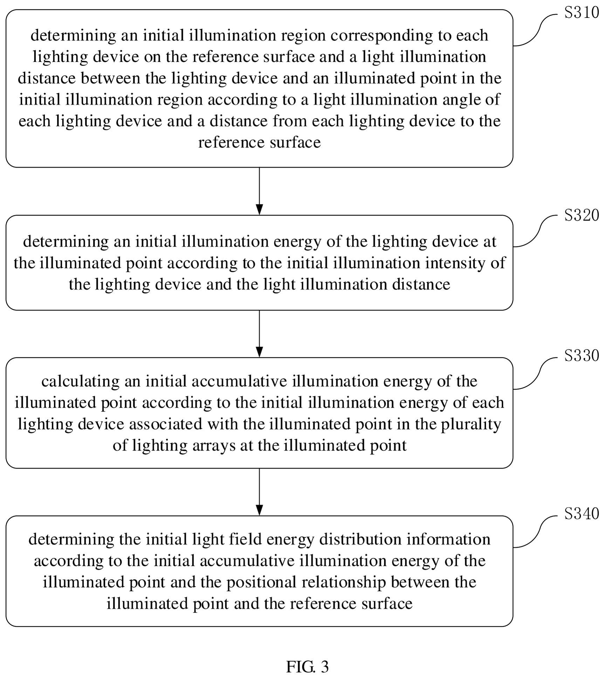

FIG. 3 schematically illustrates a flow chart of determining initial light field energy distribution information of a plurality of lighting arrays on a reference surface according to illumination attribute information of each lighting device in the plurality of lighting arrays and a positional relationship of the lighting device with respect to the reference surface according to an embodiment of the present disclosure.

As shown in FIG. 3, in operation S210, determining initial light field energy distribution information of a plurality of lighting arrays on a reference surface according to illumination attribute information of each lighting device in the plurality of lighting arrays and a positional relationship of the lighting device with respect to the reference surface may include operations S310 to S340.

In operation S310, an initial illumination region corresponding to each lighting device on the reference surface and a light illumination distance between the lighting device and an illuminated point in the initial illumination region are determined according to a light illumination angle of each lighting device and a distance from each lighting device to the reference surface.

In operation S320, an initial illumination energy of the lighting device at the illuminated point is determined according to the initial illumination intensity of the lighting device and the light illumination distance.

In operation S330, an initial accumulative illumination energy of the illuminated point is calculated according to the initial illumination energy of each lighting device associated with the illuminated point in the plurality of lighting arrays at the illuminated point.

In operation S340, the initial light field energy distribution information is determined according to the initial accumulative illumination energy of the illuminated point and the positional relationship between the illuminated point and the reference surface.

According to the embodiment of the present disclosure, the initial illumination intensity may include an initial light intensity of the light emitted by the lighting device. It should be understood that the initial illumination intensity may decrease with an increase in the light illumination distance. Accordingly, corresponding light illumination distances between different illuminated points in the reference surface and the lighting devices enable the illuminated points to generate corresponding illumination energies.

According to the embodiment of the present disclosure, the lighting device includes a light emitting element and a lampshade sleeved outside the light emitting element.

The above method for determining an installation position of a lighting device may also include: determining a light irradiation angle of the lighting device according to the shape of the lampshade.

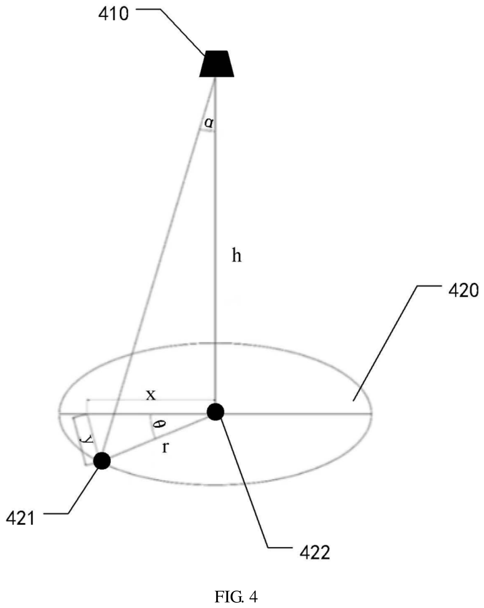

FIG. 4 schematically illustrates a schematic view of determining an initial illumination energy of an illuminated point according to an embodiment of the present disclosure.

As shown in FIG. 4, the light irradiation angle of a lighting device 410 may be $2\alpha$, and the distance between the lighting device 410 and the reference surface may be h. Accordingly, light emitted by the lighting device 410 may illuminate the reference surface, thereby forming an illuminated region 420 on the reference surface. The illuminated region 420 may be simulated as a circular region of the reference surface with a radius of r.

An illuminated point 421 of the illuminated region 420 may be located at an edge of the circular region, and accordingly, the initial accumulative illumination energy of the illuminated point 421 can be calculated by the following formula.

$$P_{xy} = P_0 \cdot k_h \cdot f(\alpha) \; ; \qquad (1)$$

In formula (1): $P_{xy}$ represents an initial accumulative illumination energy of the illuminated point 421; $P_0$ represents an initial illumination intensity of the lighting device 410; $k_h$ represents a light intensity attenuation coefficient; and $f(\alpha)$ can represent a positional relationship function between the initial illumination intensity of the lighting device 410 and the light irradiation angle a, which can be obtained by fitting the coordinates of the illuminated point in the reference surface.

For example, in the case of taking a central point 422 of the illuminated region 420 as a coordinate origin, the coordinates of the illuminated point 421 can be expressed as (x, y), and the positional relationship function can be determined by the following formulas (2) and (3).

$$x = r \cdot \cos(\theta) = h \cdot \tan(\alpha) \cdot \cos(\theta) \; ; \quad (2)$$

$$y = r \cdot \sin(\theta) = h \cdot \tan(\alpha) \cdot \sin(\theta) \; ; \quad (3)$$

Therefore, by combining formulas (1) to (3), the initial illumination energy of each illuminated point on the reference surface for a lighting device can be determined, and then initial illumination energies generated by each illuminated point for different lighting devices are accumulated to obtain an initial accumulative illumination energy of the illuminated point. For example, the initial accumulative illumination energy can be determined by formula (4).

$$P_{xy}{}' = \sum P_{xy}(i) \qquad i = 1 , 2 , 3 \dots , n ; \quad (4)$$

In formula (4), $P_{xy}{}'$ represents the initial accumulative illumination energy of the illuminated point, and n represents the number of lighting devices.

It should be understood that after obtaining the initial accumulative illumination energy of each illuminated point in the reference surface, the initial light field energy distribution information, such as a light field energy distribution curve, can be obtained according to the coordinates of the illuminated point with respect to the reference surface.

According to the embodiment of the present disclosure, the reference plane is parallel to a lighting plane formed by the plurality of lighting arrays, the calibration point is located in the lighting plane, the abnormal light field energy distribution information includes a mapping point illumination energy of a mapping point, and the mapping point is obtained by mapping the calibration point to the reference plane.

The method for determining an installation position of a lighting device in this embodiment further includes:

determining a mapping point illumination energy of a mapping point according to the initial light field energy distribution information.

In operation S220, updating an initial installation position of each lighting device according to an adjustment distance based on a comparison result between abnormal light field energy distribution information in the initial light field energy distribution information and a light field energy threshold may include the following operations:

comparing the mapping point illumination energy with the light field energy threshold to obtain a comparison result; in the case where the comparison result represents that the mapping point illumination energy is greater than the light field energy threshold, moving the lighting devices in the symmetrical lighting tuple respectively along a first direction close to the calibration point by an adjustment distance to obtain the candidate installation position of each lighting device in the symmetrical lighting tuple; and constructing a plurality of candidate lighting arrays according to the candidate installation position of each lighting device in the symmetrical lighting tuple.

According to the embodiment of the present disclosure, in the case where the initial light field energy distribution information is a light field energy distribution curve, the mapping point illumination energy may be a light field energy of the central point of the light field energy distribution curve. In the case where the plurality of lighting arrays are symmetrical with respect to the calibration point, the mapping point illumination energy can represent a degree of deviation of the light field energy distribution curve with respect to the light field energy threshold. Therefore, in the case where the comparison result represents that the mapping point illumination energy is greater than the light field energy threshold, each lighting device in the symmetrical lighting tuple may be moved close to the calibration point along the first direction according to a preset movement adjustment distance or a dynamic movement adjustment distance obtained after calculation, so that the degree of deviation of the candidate light field energy distribution information of the candidate lighting arrays at the candidate installation positions which is irradiated on the reference surface can be decreased, that is, the mapping point illumination energy is closer to the light field energy threshold, and thus the candidate light field energy distribution information is more uniform.

It should be understood that in the case where there are a plurality of symmetrical lighting tuples, lighting devices in any number of symmetrical lighting tuples can be moved, and the number of symmetrical lighting tuples that need to be moved is not limited in the embodiment of the present disclosure.

According to the embodiment of the present disclosure, the operation of updating an initial installation position of each lighting device in the symmetrical lighting tuple can be performed iteratively multiple times, that is, after obtaining the current candidate lighting array, a comparison result between a mapping point illumination energy corresponding to the current candidate lighting array and the light field energy threshold may be iteratively determined until the mapping point illumination energy satisfies the light field energy range corresponding to the light field energy threshold, so as to obtain corresponding target installation positions.

According to the embodiment of the present disclosure, there are a plurality of symmetrical lighting tuples, and the plurality of symmetrical lighting tuples include a target symmetrical lighting tuple.

In the above operation, moving the lighting devices in the symmetrical lighting tuple respectively along a first direction close to the calibration point by an adjustment distance may include the following operations:

moving target lighting devices in the target symmetrical lighting tuple respectively along the first direction close to the calibration point by an adjustment distance, so as to obtain a candidate installation position of each target lighting device in the target symmetrical lighting tuple.

According to the embodiment of the present disclosure, the target symmetrical lighting tuple may be determined by a preset method, or determined based on other methods, such as by a random setting method. The specific method for determining the target symmetrical lighting tuple is not limited in the embodiment of the present disclosure, and may be chosen according to actual needs by those skilled in the art.

According to the embodiment of the present disclosure, the target symmetrical lighting tuple may be selected by a prediction model constructed based on a machine learning algorithm, thereby improving overall determination of the target installation positions, and achieving the portability and accuracy of the target installation position design.

According to the embodiment of the present disclosure, updating an initial installation position of each lighting device according to an adjustment distance based on a comparison result between abnormal light field energy distribution information in the initial light field energy distribution information and a light field energy threshold further includes the following operations:

comparing the mapping point illumination energy with the light field energy threshold to obtain a comparison result;
in case where the comparison result represents that the mapping point illumination energy is less than the light field energy threshold, moving the lighting devices in the symmetrical lighting tuple respectively along a second direction away from the calibration point by an adjustment distance to obtain the candidate installation position of each lighting device in the symmetrical lighting tuple; and constructing a plurality of candidate lighting arrays according to the candidate installation positions of each lighting device in the symmetrical lighting tuple.

It is to be noted that the light field energy threshold may be determined by the upper limit light field energy value and/or the lower limit light field energy value of the light field energy range, so that the target installation position can be accurately determined.

According to the embodiment of the present disclosure, there are a plurality of symmetrical lighting tuples, and the plurality of symmetrical lighting tuples include a target symmetrical lighting tuple.

In the above operation, moving the lighting devices in the symmetrical lighting tuple respectively along a second direction away from the calibration point by an adjustment distance may include the following operations:

moving target lighting devices in the target symmetrical lighting tuple respectively along the second direction away from the calibration point by an adjustment distance, so as to obtain a candidate installation positions of each target lighting device in the target symmetrical lighting tuple.

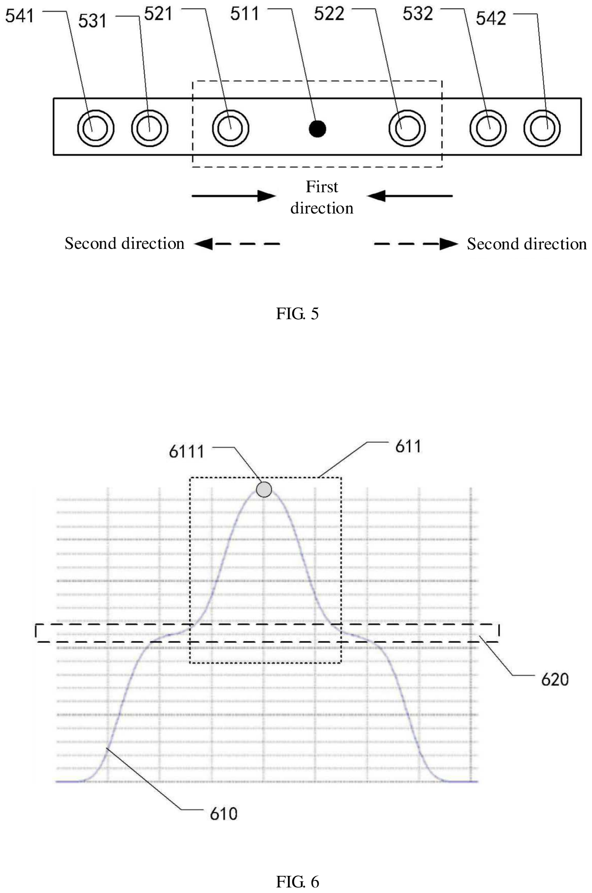

FIG. 5 schematically illustrates a schematic view of disposing lighting devices at initial installation positions according to an embodiment of the present disclosure.

FIG. 6 schematically illustrates a schematic view of initial light field energy distribution information according to an embodiment of the present disclosure.

Combining FIG. 5 with FIG. 6, lighting devices 521, 522, 531, 532, 541 and 542 may be disposed at their respective initial installation positions respectively, wherein the lighting devices 521, 531 and 541 constitute a lighting array, the lighting devices 522, 532 and 542 constitute a lighting array, and the two lighting arrays are symmetrical with respect to a calibration point 511. The initial installation distances between the lighting devices 521, 531 and 541 in the lighting array gradually increases along an arrangement direction from away from the calibration point to close to the calibration point 511, that is, the initial installation distances gradually become sparse along a direction towards the calibration point. The symmetrical lighting tuple may include a first symmetrical lighting tuple consisting of lighting devices 521 and 522, a second symmetrical lighting tuple consisting of lighting devices 531 and 532, and a third symmetrical lighting tuple consisting of lighting devices 541 and 542.

Initial light field energy distribution information 610 of the reference surface can be calculated according to the initial installation positions of the lighting devices 521, 522, 531, 532, 541 and 542, the illumination attribute information of the lighting devices 521, 522, 531, 532, 541 and 542, and the positional relationships between the initial installation positions and the reference surface, and the light field energy distribution information 610 may be a light field energy distribution curve.

It is to be noted that in a coordinate system corresponding to the light field energy distribution information 610 in FIG. 6, the horizontal axis is a coordinate position of the reference surface, and the vertical axis may be an illumination energy value. The light field energy distribution information 610 may include abnormal energy distribution information 611 (abnormal energy distribution curve), and the abnormal energy distribution information 611 may include a mapping point illumination energy 6111. The mapping point illumination energy 6111 may be an initial accumulative illumination energy corresponding to a mapping point formed by mapping the calibration point 511 to the reference surface.

According to the embodiment of the present disclosure, in case where the mapping point illumination energy 6111 is greater than the light field energy threshold, for example, in case where the mapping point illumination energy 6111 is greater than the light field energy of a light field energy range 620, the first symmetrical illumination tuple consisting of the lighting devices 521 and 522 can be moved along the first direction, that is, along the direction close to the calibration point 511, by a preset adjustment distance, so that the lighting devices 521 and 522 can be moved to the candidate installation positions, and then the current candidate lighting array can be obtained. Accordingly, the candidate light field energy distribution information can be obtained according to the current candidate lighting array.

It should be understood that the mapping point illumination energy of the candidate light field energy distribution information may be closer to the light field energy range 620, so that the light field energy distribution curve corresponding to the candidate light field energy distribution information is gentler, which represents that the light field provided by the plurality of lighting arrays is more uniform.

In case where the mapping point illumination energy of the current candidate light field energy distribution information is still greater than the light field energy threshold corresponding to the light field energy range 620, the candidate installation positions of the lighting devices in the symmetrical lighting tuple can be updated based on the same or similar method in the above embodiment until the candidate light field energy distribution information corresponding to the obtained candidate installation positions satisfies the light field energy range 620 corresponding to the light field energy threshold, for example, the mapping point illumination energy is within the light field energy range 620, so as to obtain corresponding target installation positions.

It is to be noted that, in case where the mapping point illumination energy of the current candidate light field energy distribution information is less than the light field energy threshold corresponding to the light field energy range 620, for example, less than the lower limit energy value of the light field energy range 620, the lighting devices in the symmetrical lighting tuple can be moved along the second direction by a preset adjustment distance based on the same or similar method in the above embodiment until the mapping point illumination energy of the current candidate light field energy distribution information is within the light field energy range 620, so as to obtain corresponding target installation positions.

It should be understood that, during the process of updating the symmetrical lighting tuple, any one or more of the first symmetrical lighting tuple, the second symmetrical lighting tuple and the third lighting tuple in FIG. 5 can be adjusted, for example, the first symmetrical lighting tuple, the second symmetrical lighting tuple and the third lighting tuple may be all determined as target symmetrical lighting tuples, or the first symmetrical lighting tuple and the second symmetrical lighting tuple may be selected as target symmetrical lighting tuples according to actual needs.

An embodiment of the present disclosure further provides a lighting apparatus for light supplement, including: a plurality of lighting devices and a lighting device installation structure.

The lighting device installation structure includes a plurality of target installation positions, and the target installation positions are configured to install the lighting devices; wherein the target installation positions are obtained by the method for determining an installation position of a lighting device provided in the above embodiment.

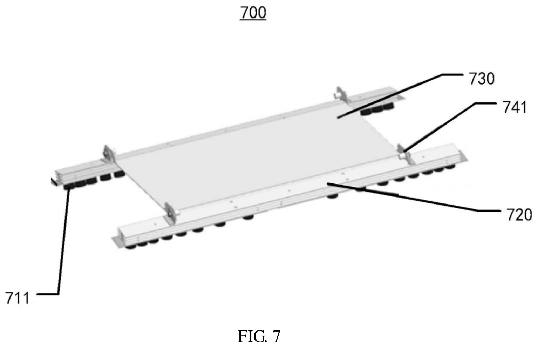

FIG. 7 schematically illustrates a structural schematic view of a lighting apparatus for light supplement according to an embodiment of the present disclosure.

As shown in FIG. 7, a lighting apparatus 700 may include a lighting device 711 and a lighting device installation structure 720. A plurality of lighting devices 711 may be installed at target installation positions of the lighting device installation structure 720. The target installation position of each lighting device 711 may be obtained by the method for determining an installation position of a lighting device in the above embodiment.

The lighting apparatus 700 may have two lighting device installation structures 720. The lighting device installation structure 720 may be installed on a fixed component 730 by means of a rotational installation component 741 so as to adjust an illumination angle of the lighting device 711.

It is to be noted that the lighting apparatus 700 may further include other components such as a lampshade, which is not limited in the embodiment of the present disclosure.

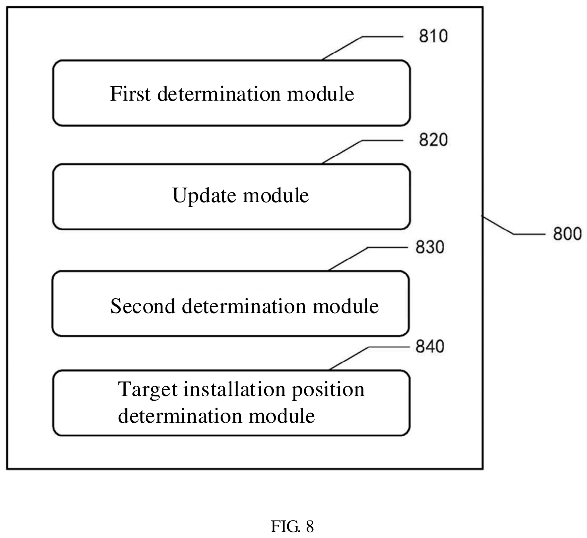

Based on the method for determining an installation position of a lighting device described above, the present disclosure further provides a device for determining an installation position of a lighting device. The device will be described in detail in conjunction with FIG. 8 hereinafter.

FIG. 8 schematically illustrates a structural block diagram of a device for determining an installation position of a lighting device according to an embodiment of the present disclosure.

As shown in FIG. 8, a device 800 for determining an installation position of a lighting device according to this embodiment includes a first determination module 810, an update module 820, a second determination module 830 and a target installation position determination module 840.

The first determination module 810 is used to determine initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple.

The update module 820 is used to update an initial installation position of each lighting device in the symmetrical lighting tuple according to an adjustment distance based on a comparison result between abnormal light field energy distribution information in the initial light field energy distribution information and a light field energy threshold, obtaining a plurality of candidate lighting arrays.

The second determination module 830 is used to determine candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface.

The target installation position determination module 840 is used to determine a candidate installation position of each lighting device in the candidate lighting arrays as a target installation position in the case where abnormal light field energy distribution information in the candidate light field energy distribution information satisfies a light field energy range corresponding to the light field energy threshold.

According to the embodiment of the present disclosure, the illumination attribute information includes a light irradiation angle and an initial illumination intensity, and the positional relationship includes a distance from each lighting device to the reference surface.

The first determination module includes: a first determination unit, a second determination unit, an initial accumulative illumination energy calculation unit, and an initial light field energy distribution information determination unit.

The first determination unit is used to determine an initial illumination region corresponding to each lighting device on the reference surface and a light illumination distance between the lighting device and an illuminated point in the initial illumination region according to a light irradiation angle of each lighting device and a distance from each lighting device to the reference surface.

The second determination unit is used to determine an initial illumination energy of the lighting device at the illuminated point according to the initial illumination intensity of the lighting device and the light illumination distance.

The initial accumulative illumination energy calculation unit is used to calculate an initial accumulative illumination energy of the illuminated point according to the initial illumination energy of each lighting device associated with the illuminated point in the plurality of lighting arrays at the illuminated point.

The initial light field energy distribution information determination unit is used to determine initial light field energy distribution information according to the initial accumulative illumination energy of the illuminated point and a positional relationship between the illuminated point and the reference surface.

According to the embodiment of the present disclosure, the reference surface is parallel to an illumination plane formed by the plurality of lighting arrays, the calibration point is located in the illumination plane, the abnormal light field energy distribution information includes a mapping point illumination energy of a mapping point, and the mapping point is obtained by mapping the calibration point to the reference surface.

The device for determining an installation position of a lighting device further includes a mapping point illumination energy determination module.

The mapping point illumination energy determination module is used to determine the mapping point illumination energy of the mapping point according to the initial light field energy distribution information.

The update module includes: a first comparison unit, a first candidate installation position determination unit and a first candidate lighting array construction unit.

The first comparison unit is used to compare the mapping point illumination energy with the light field energy threshold to obtain a comparison result.

The first candidate installation position determination unit is used to move the lighting devices in the symmetrical lighting tuple respectively along a first direction close to the calibration point by an adjustment distance in case where the comparison result represents that the mapping point illumination energy of is greater than the light field energy threshold, so as to obtain the candidate installation position of each lighting device in the symmetrical lighting tuple.

The first candidate lighting array construction unit is used to construct a plurality of candidate lighting arrays according to the candidate installation position of each lighting device in the symmetrical lighting tuple.

According to the embodiment of the present disclosure, there are a plurality of symmetrical lighting tuples, and the plurality of symmetrical lighting tuples include a target symmetrical lighting tuple.

The first candidate installation position determination unit includes a first candidate installation position determination subunit.

The first candidate installation position determination subunit is used to move target lighting devices in the target symmetrical lighting tuple respectively along the first direction close to the calibration point by an adjustment distance, so as to obtain the candidate installation position of each target lighting device in the target symmetrical lighting tuple.

According to the embodiment of the present disclosure, the update module further includes: a second comparison unit, a second candidate installation position determination unit and a second candidate lighting array construction unit.

The second comparison unit is used to compare the mapping point illumination energy with the light field energy threshold to obtain a comparison result.

The second candidate installation position determination unit is used to move the lighting devices in the symmetrical lighting tuple respectively along a second direction away from the calibration point by an adjustment distance in case where the comparison result represents that the mapping point illumination energy is less than the light field energy threshold, so as to obtain the candidate installation position of each lighting device in the symmetrical lighting tuple.

The second candidate lighting array construction unit is used to construct a plurality of candidate lighting arrays according to the candidate installation position of each lighting device in the symmetrical lighting tuple.

According to the embodiment of the present disclosure, there are a plurality of symmetrical lighting tuples, and the plurality of symmetrical lighting tuples include a target symmetrical lighting tuple.

The second candidate installation position determination unit includes a second candidate installation position determination subunit.

The second candidate installation position determination subunit is used to move target lighting devices in the target symmetrical lighting tuple respectively along the second direction away from the calibration point by an adjustment distance, so as to obtain the candidate installation position of each target lighting device in the target symmetrical lighting tuple.

According to the embodiment of the present disclosure, there are a plurality of initial installation distances between adjacent lighting devices in the lighting arrays, and the plurality of initial installation distances in the lighting arrays gradually increase along an arrangement direction from away from the calibration point to close to the calibration point.

According to the embodiment of the present disclosure, the plurality of lighting arrays being symmetrical with respect to a calibration point includes:

the plurality of lighting arrays being in central symmetry with respect to the calibration point; or the plurality of lighting arrays being in axial symmetry with respect to the calibration point.

According to the embodiment of the present disclosure, any multiple modules of the first determination module 810, the update module 820, the second determination module 830 and the target installation position determination module 840 may be combined and implemented in one module, or any one of them may be split into multiple modules. Alternatively, at least part of the functions of one or more of these modules may be combined with at least part of the functions of other modules and implemented in one module. According to the embodiment of the present disclosure, at least one of the first determination module 810, the update module 820, the second determination module 830 and the target installation position determination module 840 may be at least partially implemented as a hardware circuit, such as a field programmable gate array (FPGA), a programmable logic array (PLA), a system on a chip, a system on a substrate, a system on a package, an application-specific integrated circuit (ASIC), or may be implemented by hardware or firmware in any other reasonable way of integrating or packaging a circuit, or may be implemented by any one of the three implementation methods of software, hardware and firmware or by an appropriate combination of any of them. Alternatively, at least one of the first determination module 810, the update module 820, the second determination module 830 and the target installation position determination module 840 may be at least partially implemented as a computer program module, which may perform a corresponding function when executed.

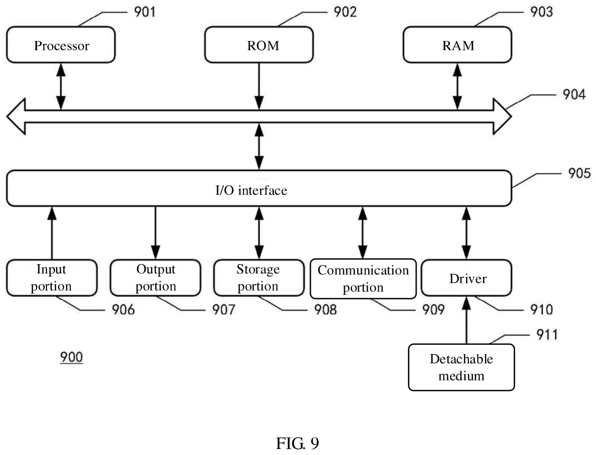

FIG. 9 schematically illustrates a block diagram of an electronic apparatus adapted for implementing a method for determining an installation position of a lighting device according to an embodiment of the present disclosure.

As shown in FIG. 9, an electronic apparatus 900 according to an embodiment of the present disclosure includes a processor 901, which can perform various appropriate actions and processing according to a program stored in a read-only memory (ROM) 902 or a program loaded from a storage portion 908 to a random access memory (RAM) 903. The processor 901 may include, for example, a general-purpose microprocessor (e.g., CPU), an instruction set processor and/or a related chipset and/or a dedicated microprocessor (e.g., application-specific integrated circuit (ASIC)), etc. The processor 901 may further include an onboard memory for caching purposes. The processor 901 may include a single processing unit or multiple processing units for performing different actions of the method flow according to the embodiment of the present disclosure.

In the RAM 903, various programs and data required for the operation of the electronic apparatus 900 are stored. The processor 901, the ROM 902 and the RAM 903 are connected to each other via a bus 904. The processor 901 performs various operations of the method flow according to the embodiment of the present disclosure by executing a program in the ROM 902 and/or the RAM 903. It is to be noted that the program may also be stored in one or more memories other than the ROM 902 and the RAM 903. The processor 901 may also perform various operations of the method flow according to the embodiment of the present disclosure by executing programs stored in the one or more memories.

According to the embodiment of the present disclosure, the electronic apparatus 900 may further include an input/output (I/O) interface 905, which is also connected to the bus 904. The electronic apparatus 900 may further include one or more of the following components connected to the I/O interface 905: an input portion 906 including a keyboard, a mouse, etc.; an output portion 907 including a cathode ray tube (CRT), a liquid crystal display (LCD), etc., as well as a speaker, etc.; a storage portion 908 including a hard disc, etc.; and a communication portion 909 including a network interface card such as a LAN card, a modem, etc. The communication portion 909 performs communication processing via a network such as the Internet. A driver 910 is also connected to the I/O interface 905 as needed. The detachable medium 911, such as a magnetic disc, an optical disc, a magneto-optical disc, a semiconductor memory, etc., is installed on the driver 910 as needed, so that a computer program read therefrom can be installed into the storage portion 908 as needed.

The present disclosure further provides a computer-readable storage medium. The computer-readable storage medium may be included in the apparatus/device/system described in the aforesaid embodiments; or it may exist alone without being assembled into the apparatus/device/system. The above computer-readable storage medium carries one or more programs, and when the one or more programs are executed, the method according to the embodiment of the present disclosure is implemented.

According to the embodiment of the present disclosure, the computer-readable storage medium may be a non-volatile computer-readable storage medium, for example, it can include but is not limited to: a portable computer disc, a hard disc, a random access memory (RAM), a read-only memory (ROM), an erasable programmable read-only memory (EPROM or flash memory), a portable compact disc read-only memory (CD-ROM), an optical storage device, a magnetic storage device, or any appropriate combination of them. In the present disclosure, the computer-readable storage medium may be any tangible medium containing or storing a program that may be used by or in combination with an instruction execution system, apparatus or device. For example, according to the embodiment of the present disclosure, the computer-readable storage medium may include the ROM 902 and/or RAM 903 described above and/or one or more memories other than the ROM 902 and RAM 903.

An embodiment of the present disclosure further includes a computer program product including a computer program, and the computer program includes a program code for executing the method shown in the flow chart. When the computer program product is run in a computer system, the program code is used to enable the computer system to implement the method for determining an installation position of a lighting device provided in the embodiment of the present disclosure.

When the computer program is executed by the processor 901, the above functions defined in the system/device of the embodiment of the present disclosure are executed. According to the embodiment of the present disclosure, the system, device, module, unit, etc. described above may be implemented by a computer program module.

In an embodiment, the computer program may rely on a tangible storage medium such as an optical storage device, a magnetic storage device, etc. In another embodiment, the computer program may also be transmitted and distributed in the form of a signal on a network medium, and downloaded and installed through the communication portion 909, and/or installed from the detachable medium 911. The program code contained in the computer program may be transmitted by any appropriate network medium, including but not limited to: wireless, wired, etc., or any appropriate combination of them.

In such an embodiment, the computer program can be downloaded and installed from the network through the communication portion 909, and/or installed from the detachable medium 911. When the computer program is executed by the processor 901, the above functions defined in the system of the embodiment of the present disclosure are executed. According to the embodiment of the present disclosure, the system, apparatus, device, module, unit, etc. described above may be implemented by a computer program module.

According to the embodiment of the present disclosure, the program code for executing the computer program provided by the embodiment of the present disclosure can be written in any combination of one or more programming languages. Specifically, these computer programs may be implemented using high-level procedural and/or object-oriented programming languages, and/or assembly/machine languages. Programming languages include but are not limited to programming languages such as Java, C++, python, "C" language or similar programming languages. The program code may be executed entirely on a user computing device, partially on a user device, partially on a remote computing device, or entirely on a remote computing device or server. In the case of a remote computing device, the remote computing device may be connected to the user computing device through any type of network, including a local area network (LAN) or a wide area network (WAN), or may be connected to an external computing device (e.g., connected through the Internet using an Internet service provider).

The flow charts and block diagrams in the drawings illustrate architecture, functions and operations that may be possibly implemented by the system, method, and computer program product according to the embodiments of the present disclosure. In this regard, each block in the flow chart or block diagram may represent a module, a program segment, or a portion of code, which contains one or more executable instructions for implementing the specified logical functions. It is also to be noted that in some alternative implementations, the function marked in the blocks may also occur in an order different from that marked in the drawings. For example, two blocks represented in succession may actually be executed substantially in parallel, and they may sometimes be executed in a reverse order, depending on the functions involved. It should also be noted that each block in the block diagram or flow chart, and a combination of blocks in the block diagram or flow chart, may be implemented by a dedicated hardware-based system that performs the specified functions or operations, or may be implemented by a combination of dedicated hardware and computer instructions.

It will be appreciated by those skilled in the art that the features described in the embodiments and/or claims of the present disclosure may be combined and/or united in a variety of ways, even if such combinations or unions are not explicitly described in the present disclosure. In particular, the features described in the embodiments and/or claims of the present disclosure may be combined and/or united in a variety of ways without departing from the spirit and teaching of the present disclosure. All of these combinations and/or unions fall within the scope of the present disclosure.

Embodiments of the present disclosure have been described above. However, these embodiments are for illustrative purposes only and are not intended to limit the scope of the present disclosure. Although the embodiments are described above separately, this does not mean that the measures in the embodiments cannot be used in combination to advantage. The scope of the present disclosure is defined by the attached claims and their equivalents. Without departing from the scope of the present disclosure, those skilled in the art can make various substitutions and modifications, which should all fall within the scope of the present disclosure.

## Claims

1. A method for determining an installation position of a lighting device, comprising:

   determining initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple;
   updating an initial installation position of each lighting device in the symmetrical lighting tuple according to an adjustment distance based on a comparison result between abnormal light field energy distribution information in the initial light field energy distribution information and a light field energy threshold, so as to obtain a plurality of candidate lighting arrays;
   determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface;
   determining a candidate installation position of each lighting device in the candidate lighting arrays as a target installation position in the case where abnormal light field energy distribution information in the candidate light field energy distribution information satisfies a light field energy range corresponding to the light field energy threshold.

2. The method according to claim 1, wherein the illumination attribute information comprises a light irradiation angle and an initial illumination intensity, and the positional relationship comprises a distance from each lighting device to the reference surface;
   wherein said determining initial light field energy distribution information of a plurality of lighting arrays on a reference surface according to illumination attribute information of each lighting device in the plurality of lighting arrays and a positional relationship of the lighting device with respect to the reference surface comprises:

   determining an initial illumination region on the reference surface corresponding to each lighting device and a light illumination distance between the lighting device and an illuminated point in the initial illumination region according to a light irradiation angle of each lighting device and a distance from each lighting device to the reference surface;
   determining an initial illumination energy of the lighting device at the illuminated point according to the initial illumination intensity of the lighting device and the light illumination distance;
   calculating an initial accumulative illumination energy of the illuminated point according to the initial illumination energy of each lighting device in the plurality of lighting arrays which is associated with the illuminated point at the illuminated point; and
   determining the initial light field energy distribution information according to the initial accumulative illumination energy of the illuminated point and a positional relationship between the illuminated point and the reference surface.

3. The method according to claim 2, wherein the reference surface is parallel to a lighting plane formed by the plurality of lighting arrays, the calibration point is located in the lighting plane, the abnormal light field energy distribution information comprises a mapping point illumination energy of a mapping point, and the mapping point is obtained by mapping the calibration point to the reference surface;
   the method further comprises:

   determining the mapping point illumination energy of the mapping point according to the initial light field energy distribution information;
   wherein said updating an initial installation position of each lighting device in the symmetrical lighting tuple according to an adjustment distance based on a comparison result between abnormal light field energy distribution information in the initial light field energy distribution information and a light field energy threshold comprises:

   comparing the mapping point illumination energy with the light field energy threshold to obtain the comparison result;

moving lighting devices in the symmetrical lighting tuple respectively along a first direction close to the calibration point by the adjustment distance to obtain the candidate installation position of each lighting device in the symmetrical lighting tuple in the case where the comparison result represents that the mapping point illumination energy is greater than the light field energy threshold; and

constructing the plurality of candidate lighting arrays according to the candidate installation position of each lighting device in the symmetrical lighting tuple.

4. The method according to claim 3, wherein there are a plurality of symmetrical lighting tuples, and the plurality of symmetrical lighting tuples comprise a target symmetrical lighting tuple;

wherein said moving lighting devices in the symmetrical lighting tuple respectively along a first direction close to the calibration point by the adjustment distance comprises:

moving target lighting devices in the target symmetrical lighting tuple respectively along the first direction close to the calibration point by the adjustment distance to obtain the candidate installation position of each target lighting device in the target symmetrical lighting tuple.

5. The method according to claim 2, wherein said updating an initial installation position of each lighting device in the symmetrical lighting tuple according to an adjustment distance based on a comparison result between abnormal light field energy distribution information in the initial light field energy distribution information and a light field energy threshold further comprises:

comparing the mapping point illumination energy with the light field energy threshold to obtain the comparison result;

moving lighting devices in the symmetrical lighting tuple respectively along a second direction away from the calibration point by the adjustment distance to obtain the candidate installation position of each lighting device in the symmetrical lighting tuple in the case where the comparison result represents that the mapping point illumination energy is less than the light field energy threshold; and

constructing the plurality of candidate lighting arrays according to the candidate installation position of each lighting device in the symmetrical lighting tuple.

6. The method according to claim 5, wherein there are a plurality of symmetrical lighting tuples, and the plurality of symmetrical lighting tuples comprise a target symmetrical lighting tuple;

wherein said moving lighting devices in the symmetrical lighting tuple respectively along a second direction away from the calibration point by the adjustment distance comprises:

moving target lighting devices in the target symmetrical lighting tuple respectively along the second direction away from the calibration point by the adjustment distance to obtain the candidate installation position of each target lighting device in the target symmetrical lighting tuple.

7. The method according to claim 1, wherein there are a plurality of initial installation distances between adjacent lighting devices in the lighting arrays;

the plurality of initial installation distances in the lighting arrays gradually increase along an arrangement direction from away from the calibration point to close to the calibration point.

8. The method according to claim 1, wherein the plurality of lighting arrays being symmetrical with respect to a calibration point comprises:

the plurality of lighting arrays being in central symmetry with respect to the calibration point; or the plurality of lighting arrays being in axial symmetry with respect to the calibration point.

9. A device for determining an installation position of a lighting device, comprising:

a first determination module for determining initial light field energy distribution information of a plurality of lighting arrays on a reference surface according to illumination attribute information of each lighting device in the plurality of lighting arrays and a positional relationship of the lighting device with respect to the reference surface, wherein the plurality of lighting arrays are symmetrical with respect to a calibration point, and lighting devices in the plurality of lighting arrays whose initial installation positions have a symmetrical positional relationship are taken as a symmetrical lighting tuple;

an update module for updating an initial installation position of each lighting device in the symmetrical lighting tuple according to an adjustment distance based on a comparison result between abnormal light field energy distribution information in the initial light field energy distribution information and a light field energy threshold, so as to obtain a plurality of candidate lighting arrays;

a second determination module for determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface;
a target installation position determination module for determining a candidate installation position of each lighting device in the candidate lighting arrays as a target installation position in the case where abnormal light field energy distribution information in the candidate light field energy distribution information satisfies a light field energy range corresponding to the light field energy threshold.

10. A lighting apparatus for light supplement, comprising:

a plurality of lighting devices; and
a lighting device installation structure, comprising a plurality of target installation positions, wherein the target installation positions are configured to install the lighting devices;
wherein the target installation positions are obtained by the method according to any one of claims 1 to 8.

11. An electronic apparatus, comprising:

one or more processors;
a storage device for storing one or more programs,
wherein, when the one or more programs are executed by the one or more processors, the method according to any one of claims 1 to 8 is implemented by the one or more processors.

12. A computer-readable storage medium having executable instructions stored thereon, which, when executed by a processor, cause the processor to implement the method according to any one of claims 1 to 8.

13. A computer program product comprising a computer program, which, when executed by a processor, implements the method according to any one of claims 1 to 8.

100

FIG. 1

determining initial light field energy distribution information of a plurality of lighting arrays on a reference surface according to illumination attribute information of each lighting device in the plurality of lighting arrays and a positional relationship of the lighting device with respect to the reference surface — S210

↓

updating an initial installation position of each lighting device in the symmetrical lighting tuple according to an adjustment distance based on a comparison result between abnormal light field energy distribution information in the initial light field energy distribution information and a light field energy threshold — S220

↓

determining candidate light field energy distribution information of the plurality of candidate lighting arrays on the reference surface according to illumination attribute information of each lighting device in the plurality of candidate lighting arrays and a positional relationship of the lighting device in the candidate lighting arrays with respect to the reference surface — S230

↓

determining a candidate installation position of each lighting device in the candidate lighting arrays as a target installation position in the case where abnormal light field energy distribution information in the candidate light field energy distribution information satisfies a light field energy range corresponding to the light field energy threshold — S240

FIG. 2

determining an initial illumination region corresponding to each lighting device on the reference surface and a light illumination distance between the lighting device and an illuminated point in the initial illumination region according to a light illumination angle of each lighting device and a distance from each lighting device to the reference surface

S310

determining an initial illumination energy of the lighting device at the illuminated point according to the initial illumination intensity of the lighting device and the light illumination distance

S320

calculating an initial accumulative illumination energy of the illuminated point according to the initial illumination energy of each lighting device associated with the illuminated point in the plurality of lighting arrays at the illuminated point

S330

determining the initial light field energy distribution information according to the initial accumulative illumination energy of the illuminated point and the positional relationship between the illuminated point and the reference surface

S340

FIG. 3

FIG. 4

541   531   521   511   522   532   542

First
direction

Second direction ◄ — — —          — — — ► Second direction

FIG. 5

6111   611

620

610

FIG. 6

700

711

730

741

720

FIG. 7

FIG. 8

FIG. 9

# EP 4 644 833 A1

## INTERNATIONAL SEARCH REPORT

| | International application No. |
|---|---|
| | **PCT/CN2023/141119** |

### A. CLASSIFICATION OF SUBJECT MATTER

G01C 15/00(2006.01)i;  G01B11/00(2006.01)i

According to International Patent Classification (IPC) or to both national classification and IPC

### B. FIELDS SEARCHED

Minimum documentation searched (classification system followed by classification symbols)

IPC:G01C15; G01B11

Documentation searched other than minimum documentation to the extent that such documents are included in the fields searched

Electronic data base consulted during the international search (name of data base and, where practicable, search terms used)

CNABS: CNTXT; CNKI: 照明, 发光, 光源, 位置, 可调, 调整, 调节, 定位, 确定, 光场, 能量, 光强, 强度, 照度, 亮度, 分布, 阈值, 预设值, 预定值, 门限, 上限, 下限, 限定, 门槛, 活动, 移动, 设计, 运动, 标定, 参考, 参照, 基准, 初始, 累计, 计算, 安装; DWPI; USTXT; WOTXT; EPTXT; JPTXT; Web of science: source, lighting, illuminate, LED, position, location, place, adjust, change, vary, move, confirm, decide, field, power, intensity, distribution, threshold, setting, predetermined, value, design, demarcation, mark, referrence, datum, point, symmetry, initial, sum, calculate, install

### C. DOCUMENTS CONSIDERED TO BE RELEVANT

| Category* | Citation of document, with indication, where appropriate, of the relevant passages | Relevant to claim No. |
|---|---|---|
| X | CN 109407399 A (SHENZHEN SPARTA OPTOELECTRONICS CO., LTD.) 01 March 2019 (2019-03-01) <br> description, paragraphs 52-187, and figures 1-14 | 1-2, 7-13 |
| A | CN 102314708 A (BEIHANG UNIVERSITY) 11 January 2012 (2012-01-11) <br> entire document | 1-13 |
| A | CN 115509019 A (JIAXING YUGUANG PHOTOELECTRIC TECHNOLOGY CO., LTD.) 23 December 2022 (2022-12-23) <br> entire document | 1-13 |
| A | CN 115515273 A (DONGGUAN BUBUGAO EDUCATION SOFTWARE CO., LTD.) 23 December 2022 (2022-12-23) <br> entire document | 1-13 |
| A | JP 2006023199 A (YAMATAKE CORP.) 26 January 2006 (2006-01-26) <br> entire document | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 March 2024** | **20 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/141119**

| Patent document cited in search report | | | Publication date (day/month/year) | Patent family member(s) | | | Publication date (day/month/year) |
|---|---|---|---|---|---|---|---|
| CN | 109407399 | A | 01 March 2019 | CN | 109407399 | B | 25 June 2021 |
| CN | 102314708 | A | 11 January 2012 | CN | 102314708 | B | 31 July 2013 |
| CN | 115509019 | A | 23 December 2022 | None | | | |
| CN | 115515273 | A | 23 December 2022 | None | | | |
| JP | 2006023199 | A | 26 January 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211688351